# EUROPEAN PATENT APPLICATION

(11) **EP 3 322 232 A1**
(43) Date of publication of application: **16.05.2018**
(21) Application number: 15901248.3
(22) Date of filing: 14.08.2015
(51) Int. Cl.: H04W 56/00

(54) **SYNCHRONIZATION METHOD AND DEVICE IN COMMUNICATIONS NETWORK**

(71) Applicant: Huawei Technologies Co., Ltd., Longgang District Shenzhen, Guangdong 518129 (CN)
(72) Inventor: WANG, Man, Shenzhen Guangdong 518129 (CN); ZHANG, Hongzhuo, Shenzhen Guangdong 518129 (CN); HU, Jun, Shenzhen Guangdong 518129 (CN)
(74) Representative: Epping - Hermann - Fischer
(86) International application number: PCT/CN2015/087063
(87) International publication number: WO 2017/028043

(57) **Abstract**

The present invention discloses a synchronization method and a device in a communications network, so as to resolve an existing problem that costs are high because a GPS positioning system needs to be installed on each base station when the GPS is used for synchronization. The method includes: obtaining, by a control node, information about a time difference between at least one group of two adjacent network nodes in a to-be-synchronized area; determining, by the control node according to the information about the time difference between the two adjacent network nodes, a time adjustment value that needs to be used when a to-be-synchronized network node in the to-be-synchronized area is synchronized with a selected reference node; and sending, by the control node, the determined time adjustment value to the to-be-synchronized network node, so that the to-be-synchronized network node adjusts time of the to-be-synchronized network node according to the corresponding time adjustment value. According to embodiments of the present invention, the control node is used to implement synchronization control on network nodes in the to-be-synchronized area. This solution is easy to implement, and reduces costs because there is no need to install GPS on each network node.

## Description

### TECHNICAL FIELD

The present invention relates to the field of communications technologies, and in particular, to a synchronization method and a device in a communications network.

### BACKGROUND

With the development of wireless communications technologies, synchronization, especially synchronization between base stations, becomes increasingly important. For a time division duplex (Time Division Duplex, TDD) system, synchronization is required between base stations. For a frequency division duplex (Frequency Division Duplex, FDD) system, synchronization between base stations can bring a significant gain. In particular, for some new features such as Multimedia Broadcast Multicast Service (Multimedia Broadcast Multicast Service, MBMS), enhanced inter-cell interference coordination (Enhanced-Inter-Cell Interference Coordination, EICIC), and coordinated multipoint transmission/reception (Coordinated Multi point Transmission, CoMP), network-wide synchronization can bring a significant gain to a system.

Currently, according to a frequently-used synchronization method, for example, Global Positioning System (Global Positioning System, GPS), relatively high synchronization accuracy can be achieved, but the GPS needs to be installed on each base station, and costs are high.

### SUMMARY

Embodiments of the present invention provide a synchronization method and a device in a communications network, so as to resolve an existing problem that costs are high because GPS needs to be installed on each base station when the GPS is used for synchronization.

According to a first aspect, a synchronization method in a communications network is provided, including:
obtaining, by a control node, information about a time difference between at least one group of two adjacent network nodes in a to-be-synchronized area;
determining, by the control node according to the information about the time difference between the two adjacent network nodes, a time adjustment value that needs to be used when a to-be-synchronized network node in the to-be-synchronized area is synchronized with a selected reference node; and
sending, by the control node, the determined time adjustment value to the to-be-synchronized network node, so that the to-be-synchronized network node adjusts time of the to-be-synchronized network node according to the corresponding time adjustment value.

With reference to the first aspect, in a first possible implementation, the obtaining, by a control node, information about a time difference between two adjacent network nodes includes:
receiving, by the control node, times at which the two adjacent network nodes separately receive a random access request sent by a terminal and that are separately reported by the two adjacent network nodes; and
determining, by the control node, the information about the time difference between the two adjacent network nodes according to the times at which the two adjacent network nodes separately receive the random access request.

With reference to the first possible implementation of the first aspect, in a second possible implementation, the obtaining, by a control node, information about a time difference between two adjacent network nodes includes:
receiving, by the control node, times at which the two adjacent network nodes separately receive each of random access requests sent by different terminals and that are separately reported by the two adjacent network nodes;
determining, by the control node for each of the different terminals, information about a difference between times at which the two adjacent network nodes receive a random access request from the terminal;
performing, by the control node, averaging processing on all determined time difference information; and
determining, by the control node, final information about the time difference between the two adjacent network nodes according to time difference information obtained after the averaging processing.

With reference to the first possible implementation of the first aspect or the second possible implementation of the first aspect, in a third possible implementation, the method further includes: receiving, by the control node, information that is about a path delay between each of the two adjacent network nodes and the terminal and that is reported by each of the two adjacent network nodes; and
the obtaining, by a control node, information about a time difference between two adjacent network nodes includes: determining, by the control node, the information about the time difference between the two adjacent network nodes according to the times at which the two adjacent network nodes separately receive the random access request and the information about the path delay between each of the two adjacent network nodes and the terminal.

With reference to the first aspect, in a fourth possible implementation, the obtaining, by a control node, information about a time difference between two adjacent network nodes includes:
receiving, by the control node, information about a difference between times at which the two adjacent network nodes receive a random access request sent by a terminal, where the information is reported by either of the two adjacent network nodes.

With reference to the fourth possible implementation of the first aspect, in a fifth possible implementation, the obtaining, by a control node, information about a time difference between two adjacent network nodes includes:
receiving, by the control node, information about a difference between times at which the two adjacent network nodes receive each of random access requests sent by different terminals, where the information is reported by either of the two adjacent network nodes;
performing, by the control node, averaging processing on all received time difference information; and
determining, by the control node, final information about the time difference between the two adjacent network nodes according to time difference information obtained after the averaging processing.

With reference to the first aspect, in a sixth possible implementation, the determining, by the control node, a time adjustment value that needs to be used when a to-be-synchronized network node is synchronized with a reference node includes:
determining, by the control node, that the to-be-synchronized network node is adjacent to the reference node; and
determining, by the control node, information about a time difference between the to-be-synchronized network node and the reference node as the time adjustment value corresponding to the to-be-synchronized network node.

With reference to the first aspect, in a seventh possible implementation, the determining, by the control node, a time adjustment value that needs to be used when a to-be-synchronized network node is synchronized with a reference node includes:
determining, by the control node, that to-be-synchronized network node is not adjacent to the reference node, and determining an intermediate network node that is adjacent to the to-be-synchronized network node;
determining, by the control node, information about a time difference between the intermediate network node and the to-be-synchronized network node, and using the determined time difference information as a first time adjustment value;
determining, by the control node, information about a time difference between the intermediate network node and the reference node, and using the determined time difference information as a second time adjustment value; and
determining, by the control node, a sum of the first time adjustment value and the second time adjustment value as the time adjustment value corresponding to the to-be-synchronized network node.

With reference to any one of the first aspect, or the first to the seventh possible implementations of the first aspect, in an eighth possible implementation, before the obtaining, by a control node, information about a time difference between two adjacent network nodes, the method further includes:
receiving, by the control node, a synchronization request sent by the to-be-synchronized network node, and delivering, by the control node to all network nodes in the to-be-synchronized area, a command used to instruct to report time information; or receiving, by the control node, a synchronization request sent by the to-be-synchronized network node, and delivering, by the control node to a network node that is included in a path from the to-be-synchronized network node to the reference node and that is in the to-be-synchronized area, a command used to instruct to report time information, where
the to-be-reported time information includes information about a difference between times at which the network node that receives the command and an adjacent network node of the network node receive a random access request sent by a terminal, or a time at which the network node that receives the command receives a random access request sent by a terminal.

With reference to any one of the first aspect, or the first to the seventh possible implementations of the first aspect, in a ninth possible implementation, before the obtaining, by a control node, information about a time difference between two adjacent network nodes, the method further includes:
after a specified adjustment period is reached, delivering, by the control node to all network nodes in the to-be-synchronized area, a command used to instruct a network node in the to-be-synchronized area to report time information, where the to-be-reported time information includes information about a difference between times at which the network node in the to-be-synchronized area and an adjacent network node of the network node receive a random access request sent by a terminal, or a time at which the network node in the to-be-synchronized area receives a random access request sent by a terminal.

With reference to any one of the first aspect, or the first to the ninth possible implementations of the first aspect, in a tenth possible implementation, the sending, by the control node, the determined time adjustment value to the to-be-synchronized network node includes:
after determining time adjustment values corresponding to all the network nodes in the to-be-synchronized area, sending, by the control node to each network node at a same moment, a time adjustment value corresponding to the network node; or
after determining time adjustment values corresponding to all the network nodes in the to-be-synchronized area, sequentially sending, by the control node to corresponding network nodes in the to-be-synchronized area in order of levels of the network nodes, time adjustment values corresponding to network nodes of different levels, where the network nodes in the to-be-synchronized area are grouped into N levels, a network node that is adjacent to the reference node belongs to a first level, and a network node that is adjacent to a network node of an ith level belongs to an (i+1)th level, where 1≤i≤N and N is a positive integer; or
sending, by the control node, the determined time adjustment value to the to-be-synchronized network node after receiving the synchronization request sent by the to-be-synchronized network node.

With reference to any one of the first aspect, or the first to the tenth possible implementations of the first aspect, in an eleventh possible implementation, when the reference node is faulty, the method further includes:
determining, by the control node according to the information about the time difference between the two adjacent network nodes, a time adjustment value that needs to be used when the to-be-synchronized network node is synchronized with a selected standby node; and
sending, by the control node, the determined time adjustment value to the to-be-synchronized network node.

With reference to any one of the first aspect, or the first to the eleventh possible implementations of the first aspect, in a twelfth possible implementation, the control node includes an operation, administration and maintenance OAM entity, a mobility management entity MME, a network management system NMS, or an element management system EMS.

According to a second aspect, a synchronization method in a communications network is provided, including:
receiving, by a network node in a to-be-synchronized area, a time adjustment value that is corresponding to the network node and that is sent by a control node; and
adjusting, by the network node, time of the network node according to the time adjustment value corresponding to the network node.

With respect to the second aspect, in a first possible implementation, the method further includes:
recording, by the network node after receiving a random access request sent by a terminal, a time at which the random access request is received; or
sending, by the network node, a handover request to another network node in the to-be-synchronized area; initiating, by the network node, blind detection after receiving a handover request acknowledgment returned by the another network node; and recording, after receiving a random access request sent by a terminal, a time at which the random access request is received.

With reference to the first possible implementation of the second aspect, in a second possible implementation, the method further includes:
reporting, by the network node, information about the time at which the random access request is received to the control node or the another network node in the to-be-synchronized area; or
reporting, by the network node after receiving a command that is used to instruct to report time information and that is sent by the control node, information about the time at which the random access request is received to the control node.

With reference to the second possible implementation of the second aspect, in a third possible implementation, the method further includes:
reporting, by the network node, information about a path delay between the network node and the terminal to the control node or the another network node; or
reporting, by the network node after receiving the command that is used to instruct to report the time information and that is sent by the control node, information about a path delay between the network node and the terminal to the control node.

With reference to the first possible implementation of the second aspect, in a fourth possible implementation, the method further includes:
receiving, by the network node, information about a time at which the another network node in the to-be-synchronized area receives the random access request, where the information is sent by the another network node;
determining, by the network node according to information about the time at which the network node receives the random access request and the information about the time at which the another network node receives the random access request, information about a difference between the times at which the network node and the another network node receive the random access request; and
reporting, by the network node, the determined time difference information to the control node, or reporting, by the network node after receiving a command that is used to instruct to report time information and that is sent by the control node, the determined time difference information to the control node.

With reference to the fourth possible implementation of the second aspect, in a fifth possible implementation, the method further includes: receiving, by the network node, information that is about a path delay between the another network node and the terminal and that is sent by the another network node; and
the determining, by the network node, information about a difference between the times at which the network node and the another network node receive the random access request includes: determining, by the network node according to information about a path delay between the network node and the terminal, the information about the path delay between the another network node and the terminal, the information about the time at which the network node receives the random access request, and the information about the time at which the another network node receives the random access request, the information about the difference between the times at which the network node and the another network node receive the random access request.

With reference to any one of the second aspect, or the first to the fifth possible implementations of the second aspect, in a sixth possible implementation, before the receiving, by a network node, a time adjustment value that is corresponding to the network node and that is sent by a control node, the method further includes:
sending, by the network node, a synchronization request to the control node after determining that the network node is not synchronized.

With reference to the sixth possible implementation of the second aspect, in a seventh possible implementation, the determining, by the network node, that the network node is not synchronized includes:
determining, by the network node when detecting that a retransmission rate of a signal sent by the network node is greater than a specified first retransmission rate threshold, that the network node is not synchronized; or
determining, by the network node when detecting that a terminal signal retransmission rate reported by the terminal is greater than a specified second retransmission rate threshold, that the network node is not synchronized; or
determining, by the network node when detecting that a synchronization feature gain of the network node is less than a specified synchronization feature gain threshold, that the network node is not synchronized.

According to a third aspect, a control node is provided, where the control node includes:
an information obtaining module, configured to obtain information about a time difference between at least one group of two adjacent network nodes in a to-be-synchronized area;
an adjustment value determining module, configured to determine, according to the information about the time difference between the two adjacent network nodes, a time adjustment value that needs to be used when a to-be-synchronized network node in the to-be-synchronized area is synchronized with a selected reference node; and
a sending module, configured to send the determined time adjustment value to the to-be-synchronized network node, so that the to-be-synchronized network node adjusts time of the to-be-synchronized network node according to the corresponding time adjustment value.

With reference to the third aspect, in a first possible implementation, the information obtaining module is specifically configured to:
receive times at which the two adjacent network nodes separately receive a random access request sent by a terminal and that are separately reported by the two adjacent network nodes; and determine the information about the time difference between the two adjacent network nodes according to the times at which the two adjacent network nodes separately receive the random access request.

With reference to the first possible implementation of the third aspect, in a second possible implementation, the information obtaining module is specifically configured to:
receive times at which the two adjacent network nodes separately receive each of random access requests sent by different terminals and that are separately reported by the two adjacent network nodes; determine, for each of the different terminals, information about a difference between times at which the two adjacent network nodes receive a random access request from the terminal; perform averaging processing on all determined time difference information; and determine final information about the time difference between the two adjacent network nodes according to time difference information obtained after the averaging processing.

With reference to the first possible implementation of the third aspect or the second possible implementation of the third aspect, in a third possible implementation, the information obtaining module is further configured to:
receive information that is about a path delay between each of the two adjacent network nodes and the terminal and that is reported by each of the two adjacent network nodes; and determine the information about the time difference between the two adjacent network nodes according to the times at which the two adjacent network nodes separately receive the random access request and the information about the path delay between each of the two adjacent network nodes and the terminal.

With reference to the third aspect, in a fourth possible implementation, the information obtaining module is specifically configured to:
receive information about a difference between times at which the two adjacent network nodes receive a random access request sent by a terminal, where the information is reported by either of the two adjacent network nodes.

With reference to the fourth possible implementation of the third aspect, in a fifth possible implementation, the information obtaining module is specifically configured to:
receive information about a difference between times at which the two adjacent network nodes receive each of random access requests sent by different terminals, where the information is reported by either of the two adjacent network nodes; perform averaging processing on all received time difference information; and determine final information about the time difference between the two adjacent network nodes according to time difference information obtained after the averaging processing.

With reference to the third aspect, in a sixth possible implementation, the adjustment value determining module is specifically configured to:
determine that the to-be-synchronized network node is adjacent to the reference node; and determine information about a time difference between the to-be-synchronized network node and the reference node as the time adjustment value corresponding to the to-be-synchronized network node.

With reference to the third aspect, in a seventh possible implementation, the adjustment value determining module is specifically configured to:
determine that the to-be-synchronized network node is not adjacent to the reference node, and determine an intermediate network node that is adjacent to the to-be-synchronized network node; determine information about a time difference between the intermediate network node and the to-be-synchronized network node, and use the determined time difference information as a first time adjustment value; determine information about a time difference between the intermediate network node and the reference node, and use the determined time difference information as a second time adjustment value; and determine a sum of the first time adjustment value and the second time adjustment value as the time adjustment value corresponding to the to-be-synchronized network node.

With reference to any one of the third aspect, or the first to the seventh possible implementations of the third aspect, in an eighth possible implementation, before obtaining the information about the time difference between the two adjacent network nodes, the information obtaining module is further configured to: receive a synchronization request sent by the to-be-synchronized network node; and
the sending module is further configured to deliver, to all network nodes in the to-be-synchronized area, a command used to instruct to report time information, or deliver, to a network node that is included in a path from the to-be-synchronized network node to the reference node and that is in the to-be-synchronized area, a command used to instruct to report time information, where
the to-be-reported time information includes information about a difference between times at which the network node that receives the command and an adjacent network node of the network node receive a random access request sent by a terminal, or a time at which the network node that receives the command receives a random access request sent by a terminal.

With reference to any one of the third aspect, or the first to the seventh possible implementations of the third aspect, in a ninth possible implementation, the sending module is further configured to:
after a specified adjustment period is reached, deliver, to all network nodes in the to-be-synchronized area, a command used to instruct a network node in the to-be-synchronized area to report time information, where the to-be-reported time information includes information about a difference between times at which the network node in the to-be-synchronized area and an adjacent network node of the network node receive a random access request sent by a terminal, or a time at which the network node in the to-be-synchronized area receives a random access request sent by a terminal.

With reference to any one of the third aspect, or the first to the ninth possible implementations of the third aspect, in a tenth possible implementation, the sending module is specifically configured to:
after the adjustment value determining module determines time adjustment values corresponding to all the network nodes in the to-be-synchronized area, send, to each network node at a same moment, a time adjustment value corresponding to the network node; or
after the adjustment value determining module determines time adjustment values corresponding to all the network nodes in the to-be-synchronized area, sequentially send, to corresponding network nodes in the to-be-synchronized area in order of levels of the network nodes, time adjustment values corresponding to network nodes of different levels, where the network nodes in the to-be-synchronized area are grouped into N levels, a network node that is adjacent to the reference node belongs to a first level, and a network node that is adjacent to a network node of an ith level belongs to an (i+1)th level, where 1≤i≤N and N is a positive integer; or
send the determined time adjustment value to the to-be-synchronized network node after the information obtaining module receives the synchronization request sent by the to-be-synchronized network node.

With reference to any one of the third aspect, or the first to the tenth possible implementations of the third aspect, in an eleventh possible implementation, when the reference node is faulty, the adjustment value determining module is further configured to:
determine, according to the information about the time difference between the two adjacent network nodes, a time adjustment value that needs to be used when the to-be-synchronized network node is synchronized with a selected standby node; and
send the determined time adjustment value to the to-be-synchronized network node.

With reference to any one of the third aspect, or the first to the eleventh possible implementations of the third aspect, in a twelfth possible implementation, the control node includes an OAM entity, an MME, an NMS, or an EMS.

According to a fourth aspect, a network node is provided, where the network node includes:
a receiving module, configured to receive a time adjustment value that is corresponding to the network node to which the receiving module belongs and that is sent by a control node; and
an adjustment module, configured to adjust, according to the time adjustment value received by the receiving module, time of the network node to which the adjustment module belongs.

With respect to the fourth aspect, in a first possible implementation, the network node further includes:
a processing module, configured to: after the receiving module receives a random access request sent by a terminal, record a time at which the random access request is received; or
send a handover request to another network node in a to-be-synchronized area; initiate blind detection after the receiving module receives a handover request acknowledgment returned by the another network node; and record, after the receiving module receives a random access request sent by a terminal, a time at which the random access request is received.

With reference to the first possible implementation of the fourth aspect, in a second possible implementation, the processing module is further configured to:
report information about the time at which the receiving module receives the random access request to the control node or the another network node in the to-be-synchronized area; or
after the receiving module receives a command that is used to instruct to report time information and that is sent by the control node, report information about the time at which the receiving module receives the random access request to the control node.

With reference to the second possible implementation of the fourth aspect, in a third possible implementation, the processing module is further configured to:
report, to the control node or the another network node, information about a path delay between the network node to which the processing module belongs and the terminal; or
after the receiving module receives the command that is used to instruct to report the time information and that is sent by the control node, report information about a path delay between the network node and the terminal to the control node.

With reference to the first possible implementation of the fourth aspect, in a fourth possible implementation, the receiving module is further configured to receive information about a time at which the another network node in the to-be-synchronized area receives the random access request, where the information is sent by the another network node; and
the processing module is further configured to: determine, according to information about the time at which the receiving module receives the random access request and the information about the time at which the another network node receives the random access request, information about a difference between the times at which the network node and the another network node receive the random access request; and report the determined time difference information to the control node, or after the receiving module receives a command that is used to instruct to report time information and that is sent by the control node, report the determined time difference information to the control node.

With reference to the fourth possible implementation of the fourth aspect, in a fifth possible implementation, the receiving module is further configured to receive information that is about a path delay between the another network node and the terminal and that is sent by the another network node; and
the processing module is further configured to determine, according to information about a path delay between the network node and the terminal, the information about the path delay between the another network node and the terminal, the information about the time at which the receiving module receives the random access request, and the information about the time at which the another network node receives the random access request, the information about the difference between the times at which the network node and the another network node receive the random access request.

With reference to any one of the fourth aspect, or the first to the fifth possible implementations of the fourth aspect, in a sixth possible implementation, the network node further includes:
a determining module, configured to send a synchronization request to the control node after determining that the network node to which the determining module belongs is not synchronized.

With reference to the sixth possible implementation of the fourth aspect, in a seventh possible implementation, that the determining module determines that the network node to which the determining module belongs is not synchronized includes:
determining, when detecting that a retransmission rate of a signal sent by the network node is greater than a specified first retransmission rate threshold, that the network node is not synchronized; or
determining, when detecting that a terminal signal retransmission rate reported by the terminal is greater than a specified second retransmission rate threshold, that the network node is not synchronized; or
determining, when detecting that a synchronization feature gain of the network node is less than a specified synchronization feature gain threshold, that the network node is not synchronized.

According to a fifth aspect, a control node is provided, where the control node includes:
a processor, configured to obtain information about a time difference between at least one group of two adjacent network nodes in a to-be-synchronized area; and determine, according to the information about the time difference between the two adjacent network nodes, a time adjustment value that needs to be used when a to-be-synchronized network node in the to-be-synchronized area is synchronized with a selected reference node; and
a transceiver, configured to send the determined time adjustment value to the to-be-synchronized network node, so that the to-be-synchronized network node adjusts time of the to-be-synchronized network node according to the corresponding time adjustment value.

With reference to the fifth aspect, in a first possible implementation, the transceiver is specifically configured to:
receive times at which the two adjacent network nodes separately receive a random access request sent by a terminal and that are separately reported by the two adjacent network nodes; and
the processor is specifically configured to determine the information about the time difference between the two adjacent network nodes according to the times at which the two adjacent network nodes separately receive the random access request.

With reference to the first possible implementation of the fifth aspect, in a second possible implementation, the transceiver is specifically configured to receive times at which the two adjacent network nodes separately receive each of random access requests sent by different terminals and that are separately reported by the two adjacent network nodes; and
the processor is specifically configured to: determine, for each of the different terminals, information about a difference between times at which the two adjacent network nodes receive a random access request from the terminal; perform averaging processing on all determined time difference information; and determine final information about the time difference between the two adjacent network nodes according to time difference information obtained after the averaging processing.

With reference to the first possible implementation of the fifth aspect or the second possible implementation of the fifth aspect, in a third possible implementation,
the transceiver is further configured to receive information that is about a path delay between each of the two adjacent network nodes and the terminal and that is reported by each of the two adjacent network nodes; and
the processor is specifically configured to determine the information about the time difference between the two adjacent network nodes according to the times at which the two adjacent network nodes separately receive the random access request and the information about the path delay between each of the two adjacent network nodes and the terminal.

With reference to the fifth aspect, in a fourth possible implementation, the transceiver is further configured to:
receive information about a difference between times at which the two adjacent network nodes receive a random access request sent by a terminal, where the information is reported by either of the two adjacent network nodes.

With reference to the fourth possible implementation of the fifth aspect, in a fifth possible implementation,
the transceiver is further configured to receive information about a difference between times at which the two adjacent network nodes receive each of random access requests sent by different terminals, where the information is reported by either of the two adjacent network nodes; and
the processor is specifically configured to: perform averaging processing on all received time difference information; and determine final information about the time difference between the two adjacent network nodes according to time difference information obtained after the averaging processing.

With reference to the fifth aspect, in a sixth possible implementation, the transceiver is specifically configured to:
determine that the to-be-synchronized network node is adjacent to the reference node; and determine information about a time difference between the to-be-synchronized network node and the reference node as the time adjustment value corresponding to the to-be-synchronized network node.

With reference to the fifth aspect, in a seventh possible implementation, the processor is specifically configured to:
determine that the to-be-synchronized network node is not adjacent to the reference node, and determine an intermediate network node that is adjacent to the to-be-synchronized network node; determine information about a time difference between the intermediate network node and the to-be-synchronized network node, and use the determined time difference information as a first time adjustment value; determine information about a time difference between the intermediate network node and the reference node, and use the determined time difference information as a second time adjustment value; and determine a sum of the first time adjustment value and the second time adjustment value as the time adjustment value corresponding to the to-be-synchronized network node.

With reference to any one of the fifth aspect, or the first to the seventh possible implementations of the fifth aspect, in an eighth possible implementation, the transceiver is further configured to: receive a synchronization request sent by the to-be-synchronized network node; and deliver, to all network nodes in the to-be-synchronized area, a command used to instruct to report time information, or deliver, to a network node that is included in a path from the to-be-synchronized network node to the reference node and that is in the to-be-synchronized area, a command used to instruct to report time information, where
the to-be-reported time information includes information about a difference between times at which the network node that receives the command and an adjacent network node of the network node receive a random access request sent by a terminal, or a time at which the network node that receives the command receives a random access request sent by a terminal.

With reference to any one of the fifth aspect, or the first to the seventh possible implementations of the fifth aspect, in a ninth possible implementation, the transceiver is further configured to:
after a specified adjustment period is reached, deliver, to all network nodes in the to-be-synchronized area, a command used to instruct a network node in the to-be-synchronized area to report time information, where the to-be-reported time information includes information about a difference between times at which the network node in the to-be-synchronized area and an adjacent network node of the network node receive a random access request sent by a terminal, or a time at which the network node in the to-be-synchronized area receives a random access request sent by a terminal.

With reference to any one of the fifth aspect, or the first to the ninth possible implementations of the fifth aspect, in a tenth possible implementation, the processor is specifically configured to:
after determining time adjustment values corresponding to all the network nodes in the to-be-synchronized area, trigger the transceiver to send, to each network node at a same moment, a time adjustment value corresponding to the network node; or
after determining time adjustment values corresponding to all the network nodes in the to-be-synchronized area, trigger the transceiver to sequentially send, to corresponding network nodes in the to-be-synchronized area in order of levels of the network nodes, time adjustment values corresponding to network nodes of different levels, where the network nodes in the to-be-synchronized area are grouped into N levels, a network node that is adjacent to the reference node belongs to a first level, and a network node that is adjacent to a network node of an ith level belongs to an (i+1)th level, where 1≤i≤N and N is a positive integer; or
after the transceiver receives the synchronization request sent by the to-be-synchronized network node, trigger the transceiver to send the determined time adjustment value to the to-be-synchronized network node.

With reference to any one of the fifth aspect, or the first to the tenth possible implementations of the fifth aspect, in an eleventh possible implementation, when the reference node is faulty, the processor is further configured to: determine, according to the information about the time difference between the two adjacent network nodes, a time adjustment value that needs to be used when the to-be-synchronized network node is synchronized with a selected standby node; and trigger the transceiver to send the determined time adjustment value to the to-be-synchronized network node.

With reference to any one of the fifth aspect, or the first to the eleventh possible implementations of the fifth aspect, in a twelfth possible implementation, the control node includes an OAM entity, an MME, an NMS, or an EMS.

According to a sixth aspect, a network node is provided, where the network node includes:
a transceiver, configured to receive a time adjustment value that is corresponding to the network node to which the transceiver belongs and that is sent by a control node; and
a processor, configured to adjust, according to the time adjustment value received by the transceiver, time of the network node to which the processor belongs.

With reference to the sixth aspect, in a first possible implementation, the processor is further configured to:
record, after the transceiver receives a random access request sent by a terminal, a time at which the random access request is received; or
trigger the transceiver to send a handover request to another network node in a to-be-synchronized area; initiate blind detection after the transceiver receives a handover request acknowledgment returned by the another network node; and record, after the transceiver receives a random access request sent by a terminal, a time at which the random access request is received.

With reference to the first possible implementation of the sixth aspect, in a second possible implementation, the processor is further configured to:
trigger the transceiver to report information about the time at which the transceiver receives the random access request to the control node or the another network node in the to-be-synchronized area; or
after the transceiver receives a command that is used to instruct to report time information and that is sent by the control node, trigger the transceiver to report information about the time at which the transceiver receives the random access request to the control node.

With reference to the second possible implementation of the sixth aspect, in a third possible implementation, the processor is further configured to:
trigger the transceiver to report information about a path delay between the network node to which the processor belongs and the terminal to the control node or the another network node; or
after the transceiver receives the command that is used to instruct to report the time information and that is sent by the control node, trigger the transceiver to report information about a path delay between the network node and the terminal to the control node.

With reference to the first possible implementation of the sixth aspect, in a fourth possible implementation, the transceiver is further configured to receive information about a time at which the another network node in the to-be-synchronized area receives the random access request, where the information is sent by the another network node; and
the processor is further configured to: determine, according to information about the time at which the transceiver receives the random access request and the information about the time at which the another network node receives the random access request, information about a difference between the times at which the network node and the another network node receive the random access request; and trigger the transceiver to report the determined time difference information to the control node, or after the transceiver receives a command that is used to instruct to report time information and that is sent by the control node, trigger the transceiver to report the determined time difference information to the control node.

With reference to the fourth possible implementation of the sixth aspect, in a fifth possible implementation, the transceiver is further configured to receive information that is about a path delay between the another network node and the terminal and that is sent by the another network node; and
the processor is further configured to determine, according to information about a path delay between the network node and the terminal, the information about the path delay between the another network node and the terminal, the information about the time at which the transceiver receives the random access request, and the information about the time at which the another network node receives the random access request, the information about the difference between the times at which the network node and the another network node receive the random access request.

With reference to any one of the sixth aspect, or the first to the fifth possible implementations of the sixth aspect, in a sixth possible implementation, the processor is further configured to:
after determining that the network node to which the processor belongs is not synchronized, trigger the transceiver to send a synchronization request to the control node.

With reference to the sixth possible implementation of the sixth aspect, in a seventh possible implementation, that the processor determines that the network node to which the processor belongs is not synchronized includes:
determining, when detecting that a retransmission rate of a signal sent by the network node is greater than a specified first retransmission rate threshold, that the network node is not synchronized; or
determining, when detecting that a terminal signal retransmission rate reported by the terminal is greater than a specified second retransmission rate threshold, that the network node is not synchronized; or
determining, when detecting that a synchronization feature gain of the network node is less than a specified synchronization feature gain threshold, that the network node is not synchronized.

In the embodiments of the present invention, the control node obtains the information about the time difference between the at least one group of two adjacent network nodes in the to-be-synchronized area; determines, according to the information about the time difference between the two adjacent network nodes, the time adjustment value that needs to be used when the to-be-synchronized network node in the to-be-synchronized area is synchronized with the selected reference node; and sends the determined time adjustment value to the to-be-synchronized network node, so that the to-be-synchronized network node adjusts the time of the to-be-synchronized network node according to the corresponding time adjustment value. According to the embodiments of the present invention, an existing control node in a network can be used to implement synchronization control on network nodes in a to-be-synchronized area. This solution is easy to implement, and reduces costs because there is no need to install GPS on each network node.

### BRIEF DESCRIPTION OF DRAWINGS

FIG. 1 is a schematic diagram of a synchronization method in a communications network according to an embodiment of the present invention;
FIG. 2 is a network topology diagram of a to-be-synchronized area in an embodiment of the present invention;
FIG. 3 is a schematic diagram of synchronization between macro base stations in an embodiment of the present invention;
FIG. 4 is a schematic diagram of synchronization between a macro base station and a small cell in an embodiment of the present invention;
FIG. 5 is a schematic diagram of synchronization between small cells in an embodiment of the present invention;
FIG. 6 is a schematic diagram of another synchronization method in a communications network according to an embodiment of the present invention;
FIG. 7 is a schematic flowchart of time information exchanged between two adjacent network nodes and a terminal according to an embodiment of the present invention;
FIG. 8 is a schematic diagram of a control node according to an embodiment of the present invention;
FIG. 9 is a schematic diagram of a network node according to an embodiment of the present invention;
FIG. 10 is a schematic diagram of another control node according to an embodiment of the present invention; and
FIG. 11 is a schematic diagram of another network node according to an embodiment of the present invention.

### DESCRIPTION OF EMBODIMENTS

The following further describes the embodiments of the present invention in detail with reference to the accompanying drawings in this specification. It should be understood that the embodiments described herein are merely used to explain the present invention but are not intended to limit the present invention.

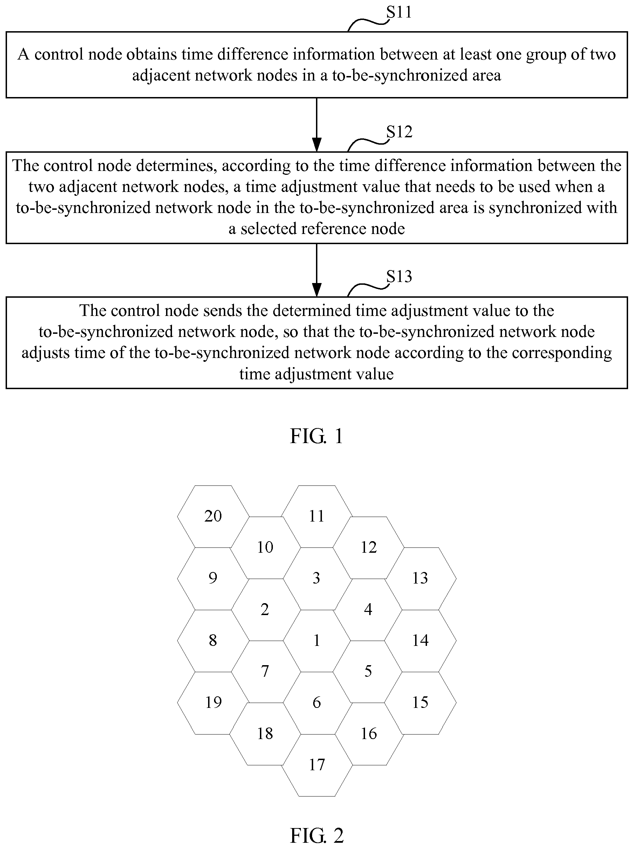

An embodiment of the present invention provides a synchronization method in a communications network. As shown in FIG. 1, the method includes the following steps.

S11. A control node obtains information about a time difference between at least one group of two adjacent network nodes in a to-be-synchronized area.

S12. The control node determines, according to the information about the time difference between the two adjacent network nodes, a time adjustment value that needs to be used when a to-be-synchronized network node in the to-be-synchronized area is synchronized with a selected reference node.

S13. The control node sends the determined time adjustment value to the to-be-synchronized network node, so that the to-be-synchronized network node adjusts time of the to-be-synchronized network node according to the corresponding time adjustment value.

In this embodiment of the present invention, the control node obtains the information about the time difference between the at least one group of two adjacent network nodes in the to-be-synchronized area; determines, according to the information about the time difference between the two adjacent network nodes, the time adjustment value that needs to be used when the to-be-synchronized network node in the to-be-synchronized area is synchronized with the selected reference node; and sends the determined time adjustment value to the to-be-synchronized network node, so that the to-be-synchronized network node adjusts the time of the to-be-synchronized network node according to the corresponding time adjustment value. According to this embodiment of the present invention, an existing control node in a network can be used to implement synchronization control on network nodes in a to-be-synchronized area. This solution is easy to implement, and reduces costs because there is no need to install GPS on each network node.

During implementation, the control node selects the reference node. The selected reference node meets at least the following condition: The reference node is located in a central area of the to-be-synchronized area, and delivers stable performance (for example, having a relatively small transmission service volume).

In this embodiment of the present invention, the control node includes but is not limited to one of the following devices:
an operation, administration and maintenance (Operation Administration and Maintenance, OAM) node, a mobility management entity (Mobility Management Entity, MME), a network management system (Network Management System, NMS), or an element management system (Element Management System, EMS).

In this embodiment of the present invention, the network node in the to-be-synchronized area includes at least one of the following devices: a base station or a relay node (Relay).

The base station includes at least a macro base station (Macro) and a small cell.

The small cell includes at least a micro base station (Micro), a pico base station (Pico), and a home eNodeB (Femto, also referred to as a femto base station).

During implementation, that a control node obtains information about a time difference between at least one group of two adjacent network nodes in S11 includes the following two preferred implementations.

Manner 1. A network node in the to-be-synchronized area proactively reports a time at which the network node receives a random access request sent by a terminal (that is, an absolute time). This specifically includes:
receiving, by the control node, times at which the two adjacent network nodes separately receive a random access request sent by the terminal and that are separately reported by the two adjacent network nodes; and
determining, by the control node, the information about the time difference between the two adjacent network nodes according to the times at which the two adjacent network nodes separately receive the random access request.

For example, assuming that a time at which a reference node of the two adjacent network nodes receives the random access request is T1, and that a time at which the other network node receives the random access request is T2, the information about the time difference between the two adjacent network nodes, determined by the control node, is Tdif=T1-T2.

In this manner, to improve synchronization accuracy, the control node collects information about a time at which a same terminal or different terminals are handed over between the two adjacent network nodes (the time information is the times at which the two adjacent network nodes separately receive the random access request sent by the terminal or terminals), to obtain multiple groups of time difference information, and performs averaging processing on the multiple groups of time difference information, to obtain highly accurate time difference information. This specifically includes:
receiving, by the control node, times at which the two adjacent network nodes separately receive each of random access requests sent by different terminals and that are separately reported by the two adjacent network nodes;
determining, by the control node for each of the different terminals, information about a difference between times at which the two adjacent network nodes receive a random access request from the terminal;
performing, by the control node, averaging processing on all determined time difference information; and
determining, by the control node, final information about the time difference between the two adjacent network nodes according to time difference information obtained after the averaging processing.

In this manner, to further improve synchronization accuracy, when the information about the time difference between the two adjacent network nodes is determined, it is required to consider compensating for a propagation path delay. The method further includes:
receiving, by the control node, information that is about a path delay between each of the two adjacent network nodes and the terminal and that is reported by each of the two adjacent network nodes; and
determining, by the control node, the information about the time difference between the two adjacent network nodes according to the times at which the two adjacent network nodes separately receive the random access request and the information about the path delay between each of the two adjacent network nodes and the terminal.

For example, assuming that a time at which one of the two adjacent network nodes receives the random access request is T1 and information about a path delay between the network node and the terminal is tl, and that a time at which the other network node receives the random access request is T2 and information about a path delay between the other network node and the terminal is t2, the information about the time difference between the two adjacent network nodes, determined by the control node, is Tdif=(T1-t1)-(T2-t2).

Manner 2. A network node in the to-be-synchronized area proactively reports information about a difference between times at which the network node and an adjacent network node of the network node receive a random access request sent by a terminal. This specifically includes:
receiving, by the control node, information about a difference between times at which the two adjacent network nodes receive the random access request sent by the terminal, where the information is reported by either of the two adjacent network nodes.

In this manner, to improve synchronization accuracy, the control node collects information about a difference between times at which a same terminal or different terminals are handed over between the two adjacent network nodes, and performs averaging processing on multiple groups of time difference information, to obtain highly accurate time difference information. This specifically includes:
receiving, by the control node, information about a difference between times at which the two adjacent network nodes receive each of random access requests sent by different terminals, where the information is reported by either of the two adjacent network nodes;
performing, by the control node, averaging processing on all received time difference information; and
determining, by the control node, final information about the time difference between the two adjacent network nodes according to time difference information obtained after the averaging processing.

Based on any one of the foregoing embodiments, that the control node determines a time adjustment value that needs to be used when a to-be-synchronized network node is synchronized with a reference node in S12 includes the following two cases.
1. When the control node determines that the to-be-synchronized network node is adjacent to the reference node,
   the control node determines information about a time difference between the to-be-synchronized network node and the reference node as the time adjustment value corresponding to the to-be-synchronized network node.
   For example, within the to-be-synchronized area shown in FIG. 2, the reference node is a node 1. If the to-be-synchronized network node is any one of a node 2 to a node 7, the time adjustment value corresponding to the to-be-synchronized network node is the information that is about the time difference between the to-be-synchronized network node and the reference node and that is obtained by the control node.
2. When the control node determines that the to-be-synchronized network node is not adjacent to the reference node,
   the control node determines an intermediate network node that is adjacent to the to-be-synchronized network node;
   the control node determines information about a time difference between the intermediate network node and the to-be-synchronized network node, and uses the determined time difference information as a first time adjustment value;
   the control node determines information about a time difference between the intermediate network node and the reference node, and uses the determined time difference information as a second time adjustment value; and
   the control node determines a sum of the first time adjustment value and the second time adjustment value as the time adjustment value corresponding to the to-be-synchronized network node.

For example, still in the to-be-synchronized area shown in FIG. 2, the to-be-synchronized network node is any one of a node 8 to a node 19. Assuming that the to-be-synchronized network node is the node 10, the control node first determines information about a difference between the node 10 and a node 2 (or a node 3), then determines information about a difference between the node 2 (or the node 3) and the reference node, and finally calculates a sum according to these two pieces of time difference information to obtain the time adjustment value corresponding to the to-be-synchronized network node. For another example, assuming that the to-be-synchronized network node is a node 20, the control node first determines information about a difference between the node 20 and a node 9 (or a node 10), then determines information about a difference between the node 9 (or the node 10) and a node 2, next determines information about a difference between the node 2 and the reference node, and finally calculates a sum according to these three pieces of time difference information to obtain the time adjustment value corresponding to the to-be-synchronized network node.

Based on any one of the foregoing embodiments, the synchronization solution provided in this embodiment of the present invention may be event-triggered, that is, after receiving a synchronization request sent by the to-be-synchronized network node, the control node triggers a synchronization procedure. Alternatively, the synchronization solution may be periodically triggered. Details are as follows.
1. Event-triggered manner. This specifically includes:
   receiving, by the control node, the synchronization request sent by the to-be-synchronized network node, and delivering, to all network nodes in the to-be-synchronized area, a command used to instruct to report time information; or receiving, by the control node, the synchronization request sent by the to-be-synchronized network node, and delivering, to a network node that is included in a path from the to-be-synchronized network node to the reference node and that is in the to-be-synchronized area, a command used to instruct to report time information, where
   the to-be-reported time information includes information about a difference between times at which the network node that receives the command and an adjacent network node of the network node receive a random access request sent by a terminal, or a time at which the network node that receives the command receives a random access request sent by a terminal.

Specifically, after receiving the synchronization request sent by the to-be-synchronized network node, the control node may trigger network-wide synchronization, that is, deliver, to all the network nodes in the to-be-synchronized area, the command used to instruct to report the time information; or may trigger synchronization of only the to-be-synchronized network node, and deliver, to the network node that is included in the path from the to-be-synchronized network node to the reference node and that is in the to-be-synchronized area, the command used to instruct to report the time information.
1. Periodic triggering manner. This specifically includes:
   after a specified adjustment period is reached, delivering, by the control node to all network nodes in the to-be-synchronized area, a command used to instruct a network node in the to-be-synchronized area to report time information, where the to-be-reported time information includes information about a difference between times at which the network node in the to-be-synchronized area and an adjacent network node of the network node receive a random access request sent by a terminal, or a time at which the network node in the to-be-synchronized area receives a random access request sent by a terminal.

Based on any one of the foregoing embodiments, that the control node sends the determined time adjustment value to the to-be-synchronized network node in S13 includes the following three preferred implementations.

Manner 1. All network nodes in the to-be-synchronized area are synchronized at the same time. This specifically includes:
after determining time adjustment values corresponding to all the network nodes in the to-be-synchronized area, sending, by the control node to each network node at a same moment, a time adjustment value corresponding to the network node.

Manner 2. Distributed hierarchical synchronization manner. This specifically includes:
after determining time adjustment values corresponding to all the network nodes in the to-be-synchronized area, sequentially sending, by the control node to corresponding network nodes in the to-be-synchronized area in order of levels of the network nodes, time adjustment values corresponding to network nodes of different levels, where the network nodes in the to-be-synchronized area are grouped into N levels, a network node that is adjacent to the reference node belongs to a first level, and a network node that is adjacent to a network node of an ith level belongs to an (i+1)th level, where 1≤i≤N and N is a positive integer.

In this manner, the network nodes in the to-be-synchronized area are grouped into the N levels. The network node that is adjacent to the reference node belongs to the first level, a network node that is adjacent to the network node of the first level belongs to a second level, and a network node that is adjacent to the network node of the second level belongs to a third level. The rest can be deduced by analogy.

For example, during synchronization, the control node first instructs the network node of the first level to perform synchronization; after a specified time interval, instructs the network node of the second level to perform synchronization; and after the specified time interval, instructs the network node of the third level to perform synchronization. The process goes on until all the network nodes in the to-be-synchronized area perform synchronization.

For another example, during synchronization, the control node first instructs the network node of the first level to perform synchronization; after receiving a synchronization complete response returned by all network nodes of the first level, the control node then instructs the network node of the second level to perform synchronization; and after receiving a synchronization complete response returned by all network nodes of the second level, the control node then instructs the network node of the third level to perform synchronization. The process goes on until all the network nodes in the to-be-synchronized area perform synchronization.

Manner 3. In the to-be-synchronized area, only a network node that sends a synchronization request performs synchronization, and other network nodes do not perform synchronization. This specifically includes:
sending, by the control node, the determined time adjustment value to the to-be-synchronized network node after receiving the synchronization request sent by the to-be-synchronized network node.

Based on any one of the foregoing embodiments, when the reference node is faulty, the method further includes:
determining, by the control node according to the information about the time difference between the two adjacent network nodes, a time adjustment value that needs to be used when the to-be-synchronized network node is synchronized with a selected standby node; and
sending, by the control node, the determined time adjustment value to the to-be-synchronized network node.

Specifically, the method for determining, by the control node, the time adjustment value of the to-be-synchronized network node relative to the selected standby node is similar to the method for determining, by the control node, the time adjustment value of the to-be-synchronized network node relative to the reference node, and details are not described herein again.

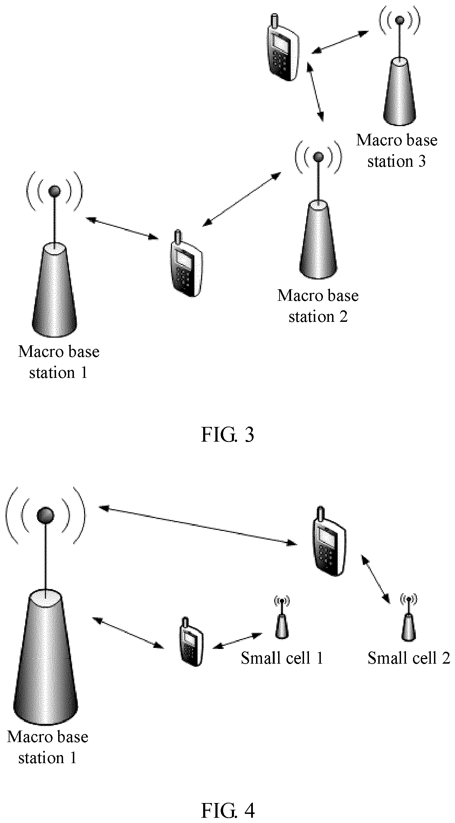

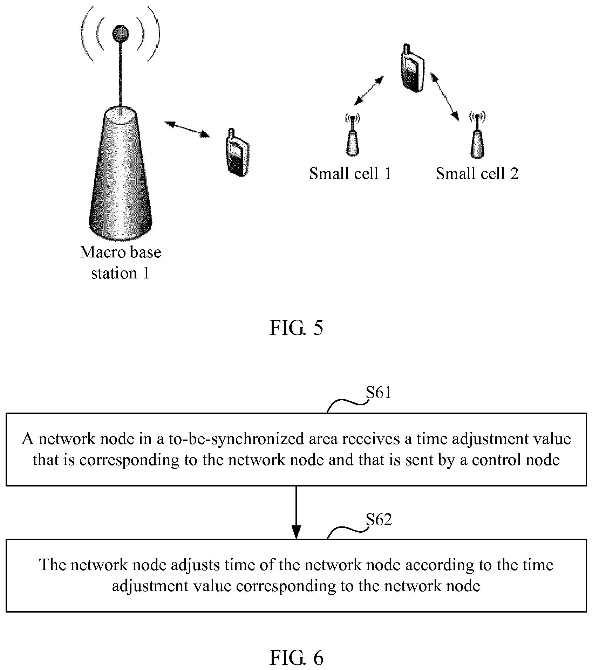

According to the solution provided in this embodiment of the present invention, synchronization between the macro base stations (as shown in FIG. 3), between the macro base station and the small cell (as shown in FIG. 4), and between the small cells (as shown in FIG. 5) can be implemented.

Based on a same invention concept, an embodiment of the present invention further provides a synchronization method in a communications network. As shown in FIG. 6, the method includes the following steps.

S61. A network node in a to-be-synchronized area receives a time adjustment value that is corresponding to the network node and that is sent by a control node.

S62. The network node adjusts time of the network node according to the time adjustment value corresponding to the network node.

During implementation, in S62, the network node adjusts the time of the network according to the time adjustment value corresponding to the network node. When adjusting the time of the network node, the network node adds up the time of the network node and the time adjustment value to obtain a synchronized time, so that the time is consistent with time of the reference node, to implement synchronization with the reference node.

During implementation, the method further includes:
recording, by the network node after receiving a random access request sent by a terminal, a time at which the random access request is received; or
sending, by the network node, a handover request (Handover Request) to another network node in the to-be-synchronized area; initiating, by the network node, blind detection after receiving a handover request acknowledgment (Handover Request Acknowledgment) returned by the another network node; and recording, after receiving a random access request sent by a terminal, a time at which the random access request is received.

During implementation, in a preferred implementation, the method further includes:
reporting, by the network node, information about the time at which the random access request is received to the control node or the another network node in the to-be-synchronized area; or
reporting, by the network node after receiving a command that is used to instruct to report time information and that is sent by the control node, information about the time at which the random access request is received to the control node.

Preferably, the method further includes:
reporting, by the network node, information about a path delay between the network node and the terminal to the control node or the another network node; or
reporting, by the network node after receiving the command that is used to instruct to report the time information and that is sent by the control node, information about a path delay between the network node and the terminal to the control node.

In a preferred implementation, the method further includes:
receiving, by the network node, information about a time at which the another network node in the to-be-synchronized area receives the random access request, where the information is sent by the another network node;
determining, by the network node according to information about the time at which the network node receives the random access request and the information about the time at which the another network node receives the random access request, information about a difference between the times at which the network node and the another network node receive the random access request; and
reporting, by the network node, the determined time difference information to the control node, or reporting, by the network node after receiving a command that is used to instruct to report time information and that is sent by the control node, the determined time difference information to the control node.

Preferably, the method further includes: receiving, by the network node, information that is about a path delay between the another network node and the terminal and that is sent by the another network node; and
the determining, by the network node, information about a difference between the times at which the network node and the another network node receive the random access request includes: determining, by the network node according to information about a path delay between the network node and the terminal, the information about the path delay between the another network node and the terminal, the information about the time at which the network node receives the random access request, and the information about the time at which the another network node receives the random access request, the information about the difference between the times at which the network node and the another network node receive the random access request.

Based on any one of the foregoing embodiments, before the receiving, by a network node, a time adjustment value that is corresponding to the network node and that is sent by a control node, the method further includes:
sending, by the network node, a synchronization request to the control node after determining that the network node is not synchronized.

Preferably, the determining, by the network node, that the network node is not synchronized includes:
determining, by the network node when detecting that a retransmission rate of a signal sent by the network node is greater than a specified first retransmission rate threshold, that the network node is not synchronized; or
determining, by the network node when detecting that a terminal signal retransmission rate reported by the terminal is greater than a specified second retransmission rate threshold, that the network node is not synchronized; or
determining, by the network node when detecting that a synchronization feature gain of the network node is less than a specified synchronization feature gain threshold, that the network node is not synchronized.

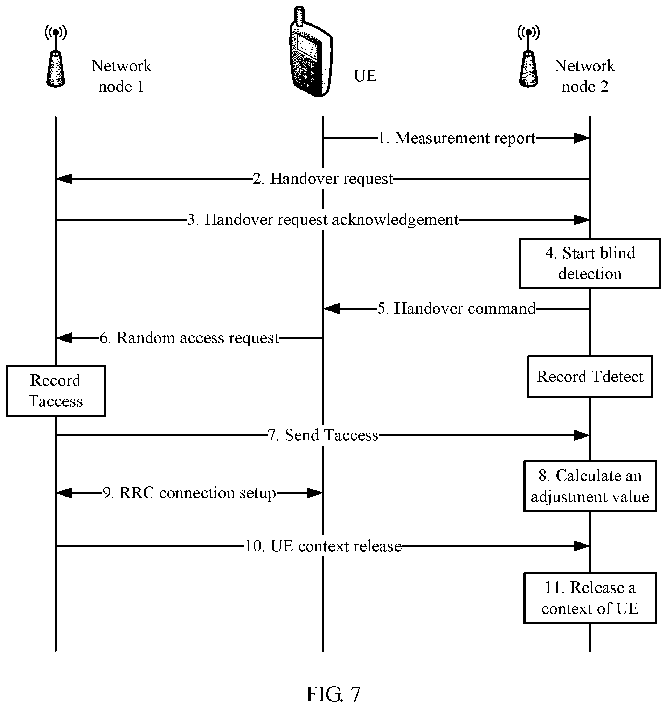

In this embodiment of the present invention, with an improvement in an existing handover process, time information in an interaction process between any two adjacent network nodes in a to-be-synchronized area and a terminal (including information about a time at which a random access request is received and information about a delay between the any two adjacent network nodes and the terminal) can be collected, so as to obtain information about a time difference between the two adjacent network nodes. As shown in FIG. 7, a specific process includes the following steps.
1. A terminal (UE) sends a measurement report (Measurement Report) to a network node 1.
2. A network node 2 sends a handover request (Handover Request) to the network node 1.
3. The network node 1 returns a handover request acknowledgment (Handover Request Acknowledge) to the network node 2.
4. The network node 2 starts blind detection (Blind Detection). When the UE sends a random access request to the network node 1, the network node 2 performs blind detection on the same random access request, and records a moment Tdetect at which the random access request is received.
5. The network node 2 sends a handover command (Handover Command) to the UE.
6. The UE sends the random access request to the network node 1.
7. The network node 1 records a moment Taccess at which the random access request is received, and sends Taccess to the network node 2.
8. The network node 2 calculates a time difference Tdif=Taccess-Tdetect.
9. The UE establishes a radio resource control (Radio Resource Control, RRC) connection (RRC connection setup) to the network node 1.
10. The network node 1 sends a UE context release (UE Context Release) to the network node 2.
11. The network node 2 releases a context of the UE, to complete a handover process.

A sequence of step 9 to step 11 and step 8 is not limited in this embodiment of the present invention. Step 9 to step 11 may be performed before step 8; step 8 may be performed before step 9 to step 11; step 8 may be performed after any one of step 9 to step 11, or the like.

The foregoing method processing process may be implemented by using a software program. The software program may be stored in a storage medium. When the stored software program is invoked, the foregoing method steps are executed.

Based on a same invention concept, an embodiment of the present invention further provides a control node. Because a principle of resolving a problem by the control node is similar to the synchronization method in a communications network shown in FIG. 1, for implementation of the control node, refer to implementation of the method shown in FIG. 1. Details are not repeated herein.

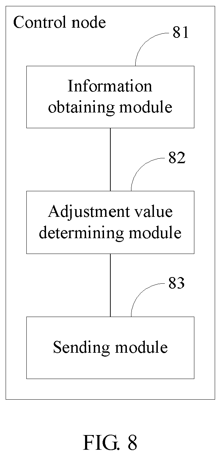

An embodiment of the present invention provides a control node. As shown in FIG. 8, the control node includes:
an information obtaining module 81, configured to obtain information about a time difference between at least one group of two adjacent network nodes in a to-be-synchronized area;
an adjustment value determining module 82, configured to determine, according to the information about the time difference between the two adjacent network nodes, a time adjustment value that needs to be used when a to-be-synchronized network node in the to-be-synchronized area is synchronized with a selected reference node; and
a sending module 83, configured to send the determined time adjustment value to the to-be-synchronized network node, so that the to-be-synchronized network node adjusts time of the to-be-synchronized network node according to the corresponding time adjustment value.

During implementation, in a preferred implementation, the information obtaining module 81 is specifically configured to:
receive times at which the two adjacent network nodes separately receive a random access request sent by a terminal and that are separately reported by the two adjacent network nodes; and determine the information about the time difference between the two adjacent network nodes according to the times at which the two adjacent network nodes separately receive the random access request.

Preferably, the information obtaining module 81 is specifically configured to:
receive times at which the two adjacent network nodes separately receive each of random access requests sent by different terminals and that are separately reported by the two adjacent network nodes; determine, for each of the different terminals, information about a difference between times at which the two adjacent network nodes receive a random access request from the terminal; perform averaging processing on all determined time difference information; and determine final information about the time difference between the two adjacent network nodes according to time difference information obtained after the averaging processing.

Preferably, the information obtaining module 81 is further configured to:
receive information that is about a path delay between each of the two adjacent network nodes and the terminal and that is reported by each of the two adjacent network nodes; and determine the information about the time difference between the two adjacent network nodes according to the times at which the two adjacent network nodes separately receive the random access request and the information about the path delay between each of the two adjacent network nodes and the terminal.

In another preferred implementation, the information obtaining module 81 is specifically configured to:
receive information about a difference between times at which the two adjacent network nodes receive a random access request sent by a terminal, where the information is reported by either of the two adjacent network nodes.

Preferably, the information obtaining module 81 is specifically configured to:
receive information about a difference between times at which the two adjacent network nodes receive each of random access requests sent by different terminals, where the information is reported by either of the two adjacent network nodes; perform averaging processing on all received time difference information; and determine final information about the time difference between the two adjacent network nodes according to time difference information obtained after the averaging processing.

During implementation, in a preferred implementation, the adjustment value determining module 82 is specifically configured to:
determine that the to-be-synchronized network node is adjacent to the reference node; and determine information about a time difference between the to-be-synchronized network node and the reference node as the time adjustment value corresponding to the to-be-synchronized network node.

In another preferred implementation, the adjustment value determining module 82 is specifically configured to:
determine that the to-be-synchronized network node is not adjacent to the reference node, and determine an intermediate network node that is adjacent to the to-be-synchronized network node; determine information about a time difference between the intermediate network node and the to-be-synchronized network node, and use the determined time difference information as a first time adjustment value; determine information about a time difference between the intermediate network node and the reference node, and use the determined time difference information as a second time adjustment value; and determine a sum of the first time adjustment value and the second time adjustment value as the time adjustment value corresponding to the to-be-synchronized network node.

Based on any one of the foregoing embodiments, in a preferred implementation, before obtaining the information about the time difference between the two adjacent network nodes, the information obtaining module 81 is further configured to receive a synchronization request sent by the to-be-synchronized network node.

The sending module 83 is further configured to deliver, to all network nodes in the to-be-synchronized area, a command used to instruct to report time information; or deliver, to a network node that is included in a path from the to-be-synchronized network node to the reference node and that is in the to-be-synchronized area, a command used to instruct to report time information, where
the to-be-reported time information includes information about a difference between times at which the network node that receives the command and an adjacent network node of the network node receive a random access request sent by a terminal, or a time at which the network node that receives the command receives a random access request sent by a terminal.

In another preferred implementation, the sending module 83 is further configured to:
after a specified adjustment period is reached, deliver, to all network nodes in the to-be-synchronized area, a command used to instruct a network node in the to-be-synchronized area to report time information, where the to-be-reported time information includes information about a difference between times at which the network node in the to-be-synchronized area and an adjacent network node of the network node receive a random access request sent by a terminal, or a time at which the network node in the to-be-synchronized area receives a random access request sent by a terminal.

Based on any one of the foregoing embodiments, the sending module 83 is specifically configured to:
after the adjustment value determining module 82 determines time adjustment values corresponding to all the network nodes in the to-be-synchronized area, send, to each network node at a same moment, a time adjustment value corresponding to the network node; or
after the adjustment value determining module 82 determines time adjustment values corresponding to all the network nodes in the to-be-synchronized area, sequentially send, to corresponding network nodes in the to-be-synchronized area in order of levels of the network nodes, time adjustment values corresponding to network nodes of different levels, where the network nodes in the to-be-synchronized area are grouped into N levels, a network node that is adjacent to the reference node belongs to a first level, and a network node that is adjacent to a network node of an ith level belongs to an (i+1)th level, where 1≤i≤N and N is a positive integer; or
send the determined time adjustment value to the to-be-synchronized network node after the information obtaining module 81 receives the synchronization request sent by the to-be-synchronized network node.

Based on any one of the foregoing embodiments, when the reference node is faulty, the adjustment value determining module 82 is further configured to:
determine, according to the information about the time difference between the two adjacent network nodes, a time adjustment value that needs to be used when the to-be-synchronized network node is synchronized with a selected standby node; and
send the determined time adjustment value to the to-be-synchronized network node.

Based on any one of the foregoing embodiments, the control node includes an OAM entity, an MME, an NMS, or an EMS.

Based on a same invention concept, an embodiment of the present invention further provides a network node. Because a principle of resolving a problem by the network node is similar to the synchronization method in a communications network shown in FIG. 6, for implementation of the network node, refer to implementation of the method shown in FIG. 6. Details are not repeated herein.

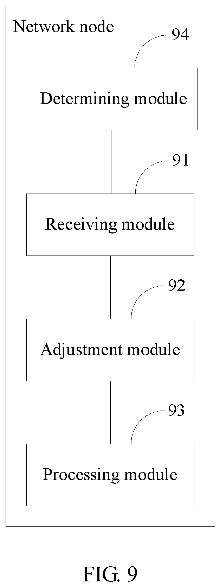

An embodiment of the present invention provides a network node. As shown in FIG. 9, the network node includes:
a receiving module 91, configured to receive a time adjustment value that is corresponding to the network node to which the receiving module 91 belongs and that is sent by a control node; and
an adjustment module 92, configured to adjust, according to the time adjustment value received by the receiving module 91, time of the network node to which the adjustment module 92 belongs.

During implementation, the network node further includes:
a processing module 93, configured to: after the receiving module 91 receives a random access request sent by a terminal, record a time at which the random access request is received; or
send a handover request to another network node in a to-be-synchronized area; initiate blind detection after the receiving module 91 receives a handover request acknowledgment returned by the another network node; and record, after the receiving module 91 receives a random access request sent by a terminal, a time at which the random access request is received.

During implementation, in a preferred implementation, the processing module 93 is further configured to:
report information about the time at which the receiving module 91 receives the random access request to the control node or the another network node in the to-be-synchronized area; or
after the receiving module 91 receives a command that is used to instruct to report time information and that is sent by the control node, report information about the time at which the receiving module 91 receives the random access request to the control node.

Preferably, the processing module 93 is further configured to:
report information about a path delay between the network node to which the processing module 93 belongs and the terminal to the control node or the another network node; or
after the receiving module 91 receives the command that is used to instruct to report the time information and that is sent by the control node, report information about a path delay between the network node and the terminal to the control node.

In another preferred implementation, the receiving module 91 is further configured to receive information about a time at which the another network node in the to-be-synchronized area receives the random access request, where the information is sent by the another network node; and
the processing module 93 is further configured to: determine, according to information about the time at which the receiving module 91 receives the random access request and the information about the time at which the another network node receives the random access request, information about a difference between times at which the network node and the another network node receive the random access request; and report the determined time difference information to the control node, or after the receiving module 91 receives a command that is used to instruct to report time information and that is sent by the control node, report the determined time difference information to the control node.

Preferably, the receiving module 91 is further configured to receive information that is about a pathc delay between the another network node and the terminal and that is sent by the another network node; and
the processing module 93 is further configured to determine, according to information about a path delay between the network node and the terminal, the information about the path delay between the another network node and the terminal, the information about the time at which the receiving module 91 receives the random access request, and the information about the time at which the another network node receives the random access request, the information about the difference between the times at which the network node and the another network node receive the random access request.

Based on any one of the foregoing embodiments, the network node further includes:
a determining module 94, configured to send a synchronization request to the control node after determining that the network node to which the determining module 94 belongs is not synchronized.

Preferably, that the determining module 94 determines that the network node to which the determining module 94 belongs is not synchronized includes:
determining, when detecting that a retransmission rate of a signal sent by the network node is greater than a specified first retransmission rate threshold, that the network node is not synchronized; or
determining, when detecting that a terminal signal retransmission rate reported by the terminal is greater than a specified second retransmission rate threshold, that the network node is not synchronized; or
determining, when detecting that a synchronization feature gain of the network node is less than a specified synchronization feature gain threshold, that the network node is not synchronized.

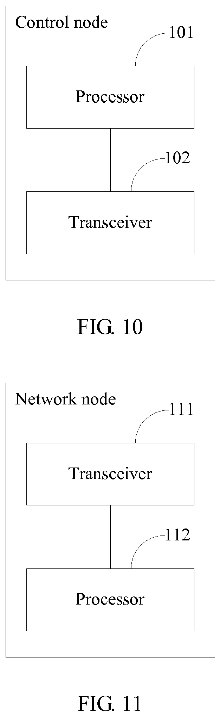

Based on a same invention concept, an embodiment of the present invention provides another control node. As shown in FIG. 10, the control node includes:
a processor 101, configured to obtain information about a time difference between at least one group of two adjacent network nodes in a to-be-synchronized area; and determine, according to the information about the time difference between the two adjacent network nodes, a time adjustment value that needs to be used when a to-be-synchronized network node in the to-be-synchronized area is synchronized with a selected reference node; and
a transceiver 102, configured to send the determined time adjustment value to the to-be-synchronized network node, so that the to-be-synchronized network node adjusts time of the to-be-synchronized network node according to the corresponding time adjustment value.

During implementation, in a preferred implementation, the transceiver 102 is further configured to receive times at which the two adjacent network nodes receive a random access request sent by a terminal and that are separately reported by the two adjacent network nodes; and
the processor 101 is specifically configured to determine the information about the time difference between the two adjacent network nodes according to the times at which the two adjacent network nodes separately receive the random access request.

Preferably, the transceiver 102 is further configured to receive times at which the two adjacent network nodes separately receive each of random access requests sent by different terminals and that are separately reported by the two adjacent network nodes; and
the processor 101 is specifically configured to: determine, for each of the different terminals, information about a difference between times at which the two adjacent network nodes receive a random access request from the terminal; perform averaging processing on all determined time difference information; and determine final information about the time difference between the two adjacent network nodes according to time difference information obtained after the averaging processing.

Preferably, the transceiver 102 is further configured to receive information that is about a path delay between each of the two adjacent network nodes and the terminal and that is reported by each of the two adjacent network nodes; and
the processor 101 is specifically configured to determine the information about the time difference between the two adjacent network nodes according to the times at which the two adjacent network nodes separately receive the random access request and the information about the path delay between each of the two adjacent network nodes and the terminal.

In another preferred implementation, the transceiver 102 is further configured to receive information about a difference between times at which the two adjacent network nodes receive a random access request sent by a terminal, where the information is reported by either of the two adjacent network nodes.

Preferably, the transceiver 102 is further configured to receive information about a difference between times at which the two adjacent network nodes receive each of random access requests sent by different terminals, where the information is reported by either of the two adjacent network nodes; and
the processor 101 is specifically configured to: perform averaging processing on all received time difference information; and determine final information about the time difference between the two adjacent network nodes according to time difference information obtained after the averaging processing.

During implementation, in a preferred implementation, the processor 101 is specifically configured to:
determine that the to-be-synchronized network node is adjacent to the reference node; and determine information about a time difference between the to-be-synchronized network node and the reference node as the time adjustment value corresponding to the to-be-synchronized network node.

In another preferred implementation, the processor 101 is specifically configured to:
determine that the to-be-synchronized network node is not adjacent to the reference node, and determine an intermediate network node that is adjacent to the to-be-synchronized network node; determine information about a time difference between the intermediate network node and the to-be-synchronized network node, and use the determined time difference information as a first time adjustment value; determine information about a time difference between the intermediate network node and the reference node, and use the determined time difference information as a second time adjustment value; and determine a sum of the first time adjustment value and the second time adjustment value as the time adjustment value corresponding to the to-be-synchronized network node.

Based on any one of the foregoing embodiments, in a preferred implementation, the transceiver 102 is further configured to: receive a synchronization request sent by the to-be-synchronized network node; and deliver, to all network nodes in the to-be-synchronized area, a command used to instruct to report time information, or deliver, to a network node that is included in a path from the to-be-synchronized network node to the reference node and that is in the to-be-synchronized area, a command used to instruct to report time information, where
the to-be-reported time information includes information about a difference between times at which the network node that receives the command and an adjacent network node of the network node receive a random access request sent by a terminal, or a time at which the network node that receives the command receives a random access request sent by a terminal.

In another preferred implementation, the transceiver 102 is further configured to:
after a specified adjustment period is reached, deliver, to all network nodes in the to-be-synchronized area, a command used to instruct a network node in the to-be-synchronized area to report time information, where the to-be-reported time information includes information about a difference between times at which the network node in the to-be-synchronized area and an adjacent network node of the network node receive a random access request sent by a terminal, or a time at which the network node in the to-be-synchronized area receives a random access request sent by a terminal.

Based on any one of the foregoing embodiments, the processor 101 is specifically configured to:
after determining time adjustment values corresponding to all the network nodes in the to-be-synchronized area, trigger the transceiver 102 to send, to each network node at a same moment, a time adjustment value corresponding to the network node; or
after determining time adjustment values corresponding to all the network nodes in the to-be-synchronized area, trigger the transceiver 102 to sequentially send, to corresponding network nodes in the to-be-synchronized area in order of levels of the network nodes, time adjustment values corresponding to network nodes of different levels, where the network nodes in the to-be-synchronized area are grouped into N levels, a network node that is adjacent to the reference node belongs to a first level, and a network node that is adjacent to a network node of an ith level belongs to an (i+1)th level, where 1≤i≤N and N is a positive integer; or
after the transceiver 102 receives the synchronization request sent by the to-be-synchronized network node, trigger the transceiver 102 to send the determined time adjustment value to the to-be-synchronized network node.

Based on any one of the foregoing embodiments, when the reference node is faulty, the processor 101 is further configured to: determine, according to the information about the time difference between the two adjacent network nodes, a time adjustment value that needs to be used when the to-be-synchronized network node is synchronized with a selected standby node; and trigger the transceiver 102 to send the determined time adjustment value to the to-be-synchronized network node.

Based on any one of the foregoing embodiments, the control node includes an OAM entity, an MME, an NMS, or an EMS.

Based on a same invention concept, an embodiment of the present invention provides another network node. As shown in FIG. 11, the network node includes:
a transceiver 111, configured to receive a time adjustment value that is corresponding to the network node to which the transceiver 111 belongs and that is sent by a control node; and
a processor 112, configured to adjust, according to the time adjustment value received by the transceiver 111, time of the network node to which the processor 112 belongs.

During implementation, the processor 112 is further configured to:
record, after the transceiver 111 receives a random access request sent by a terminal, a time at which the random access request is received; or
trigger the transceiver 111 to send a handover request to another network node in a to-be-synchronized area; initiate blind detection after the transceiver 111 receives a handover request acknowledgment returned by the another network node; and record, after the transceiver 111 receives a random access request sent by a terminal, a time at which the random access request is received.

During implementation, in a preferred implementation, the processor 112 is further configured to:
trigger the transceiver 111 to report information about the time at which the transceiver 111 receives the random access request to the control node or the another network node in the to-be-synchronized area; or
after the transceiver 111 receives a command that is used to instruct to report time information and that is sent by the control node, trigger the transceiver 111 to report the information about the time at which the transceiver 111 receives the random access request to the control node.

Preferably, the processor 112 is further configured to:
trigger the transceiver 111 to report information about a path delay between the network node to which the processor 112 belongs and the terminal to the control node or the another network node; or
after the transceiver 111 receives the command that is used to instruct to report the time information and that is sent by the control node, trigger the transceiver 111 to report information about a path delay between the network node and the terminal to the control node.

In another preferred implementation, the transceiver 111 is further configured to receive information about a time at which the another network node in the to-be-synchronized area receives the random access request, where the information is sent by the another network node; and
the processor 112 is further configured to: determine, according to information about the time at which the transceiver 111 receives the random access request and the information about the time at which the another network node receives the random access request, information about a difference between the times at which the network node and the another network node receive the random access request; and trigger the transceiver 111 to report the determined time difference information to the control node, or after the transceiver 111 receives a command that is used to instruct to report time information and that is sent by the control node, trigger the transceiver 111 to report the determined time difference information to the control node.

Preferably, the transceiver 111 is further configured to receive information that is about a path delay between the another network node and the terminal and that is sent by the another network node; and
the processor 112 is further configured to determine, according to information about a path delay between the network node and the terminal, the information about the path delay between the another network node and the terminal, the information about the time at which the transceiver 111 receives the random access request, and the information about the time at which the another network node receives the random access request, the information about the difference between the times at which the network node and the another network node receive the random access request.

Based on any one of the foregoing embodiments, the processor 112 is further configured to:
after determining that the network node to which the processor 112 belongs is not synchronized, trigger the transceiver 111 to send a synchronization request to the control node.

Preferably, that the processor 112 determines that the network node to which the processor 112 belongs is not synchronized includes:
determining, when detecting that a retransmission rate of a signal sent by the network node is greater than a specified first retransmission rate threshold, that the network node is not synchronized; or
determining, when detecting that a terminal signal retransmission rate reported by the terminal is greater than a specified second retransmission rate threshold, that the network node is not synchronized; or
determining, when detecting that a synchronization feature gain of the network node is less than a specified synchronization feature gain threshold, that the network node is not synchronized.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technolo gies.

## Claims

1. A synchronization method in a communications network, wherein the method comprises:
obtaining, by a control node, information about a time difference between at least one group of two adjacent network nodes in a to-be-synchronized area;
determining, by the control node according to the information about the time difference between the two adjacent network nodes, a time adjustment value that needs to be used when a to-be-synchronized network node in the to-be-synchronized area is synchronized with a selected reference node; and
sending, by the control node, the determined time adjustment value to the to-be-synchronized network node, so that the to-be-synchronized network node adjusts time of the to-be-synchronized network node according to the corresponding time adjustment value.

2. The method according to claim 1, wherein the obtaining, by a control node, information about a time difference between two adjacent network nodes comprises:
receiving, by the control node, times at which the two adjacent network nodes separately receive a random access request sent by a terminal and that are separately reported by the two adjacent network nodes; and
determining, by the control node, the information about the time difference between the two adjacent network nodes according to the times at which the two adjacent network nodes separately receive the random access request.

3. The method according to claim 2, wherein the obtaining, by a control node, information about a time difference between two adjacent network nodes comprises:
receiving, by the control node, times at which the two adjacent network nodes separately receive each of random access requests sent by different terminals and that are separately reported by the two adjacent network nodes;
determining, by the control node for each of the different terminals, information about a difference between times at which the two adjacent network nodes receive a random access request from the terminal;
performing, by the control node, averaging processing on all determined time difference information; and
determining, by the control node, final information about the time difference between the two adjacent network nodes according to time difference information obtained after the averaging processing.

4. The method according to claim 2 or 3, wherein the method further comprises: receiving, by the control node, information that is about a path delay between each of the two adjacent network nodes and the terminal and that is reported by each of the two adjacent network nodes; and
the obtaining, by a control node, information about a time difference between two adjacent network nodes comprises: determining, by the control node, the information about the time difference between the two adjacent network nodes according to the times at which the two adjacent network nodes separately receive the random access request and the information about the path delay between each of the two adjacent network nodes and the terminal.

5. The method according to claim 1, wherein the obtaining, by a control node, information about a time difference between two adjacent network nodes comprises:
receiving, by the control node, information about a difference between times at which the two adjacent network nodes receive a random access request sent by a terminal, wherein the information is reported by either of the two adjacent network nodes.

6. The method according to claim 5, wherein the obtaining, by a control node, information about a time difference between two adjacent network nodes comprises:
receiving, by the control node, information about a difference between times at which the two adjacent network nodes receive each of random access requests sent by different terminals, wherein the information is reported by either of the two adjacent network nodes;
performing, by the control node, averaging processing on all received time difference information; and
determining, by the control node, final information about the time difference between the two adjacent network nodes according to time difference information obtained after the averaging processing.

7. The method according to claim 1, wherein the determining, by the control node, a time adjustment value that needs to be used when a to-be-synchronized network node is synchronized with a reference node comprises:
determining, by the control node, that the to-be-synchronized network node is adjacent to the reference node; and
determining, by the control node, information about a time difference between the to-be-synchronized network node and the reference node as the time adjustment value corresponding to the to-be-synchronized network node.

8. The method according to claim 1, wherein the determining, by the control node, a time adjustment value that needs to be used when a to-be-synchronized network node is synchronized with a reference node comprises:
determining, by the control node, that to-be-synchronized network node is not adjacent to the reference node, and determining an intermediate network node that is adjacent to the to-be-synchronized network node;
determining, by the control node, information about a time difference between the intermediate network node and the to-be-synchronized network node, and using the determined time difference information as a first time adjustment value;
determining, by the control node, information about a time difference between the intermediate network node and the reference node, and using the determined time difference information as a second time adjustment value; and
determining, by the control node, a sum of the first time adjustment value and the second time adjustment value as the time adjustment value corresponding to the to-be-synchronized network node.

9. The method according to any one of claims 1 to 8, wherein before the obtaining, by a control node, information about a time difference between two adjacent network nodes, the method further comprises:
receiving, by the control node, a synchronization request sent by the to-be-synchronized network node, and delivering, by the control node to all network nodes in the to-be-synchronized area, a command used to instruct to report time information; or receiving, by the control node, a synchronization request sent by the to-be-synchronized network node, and delivering, by the control node to a network node that is comprised in a path from the to-be-synchronized network node to the reference node and that is in the to-be-synchronized area, a command used to instruct to report time information, wherein
the to-be-reported time information comprises information about a difference between times at which the network node that receives the command and an adjacent network node of the network node receive a random access request sent by a terminal, or a time at which the network node that receives the command receives a random access request sent by a terminal.

10. The method according to any one of claims 1 to 8, wherein before the obtaining, by a control node, information about a time difference between two adjacent network nodes, the method further comprises:
after a specified adjustment period is reached, delivering, by the control node to all network nodes in the to-be-synchronized area, a command used to instruct a network node in the to-be-synchronized area to report time information, wherein the to-be-reported time information comprises information about a difference between times at which the network node in the to-be-synchronized area and an adjacent network node of the network node receive a random access request sent by a terminal, or a time at which the network node in the to-be-synchronized area receives a random access request sent by a terminal.

11. The method according to any one of claims 1 to 10, wherein the sending, by the control node, the determined time adjustment value to the to-be-synchronized network node comprises:
after determining time adjustment values corresponding to all the network nodes in the to-be-synchronized area, sending, by the control node to each network node at a same moment, a time adjustment value corresponding to the network node; or
after determining time adjustment values corresponding to all the network nodes in the to-be-synchronized area, sequentially sending, by the control node to corresponding network nodes in the to-be-synchronized area in order of levels of the network nodes, time adjustment values corresponding to network nodes of different levels, wherein the network nodes in the to-be-synchronized area are grouped into N levels, a network node that is adjacent to the reference node belongs to a first level, and a network node that is adjacent to a network node of an i^{th} level belongs to an (i+1)^{th} level, wherein 1≤i≤N and N is a positive integer; or
sending, by the control node, the determined time adjustment value to the to-be-synchronized network node after receiving the synchronization request sent by the to-be-synchronized network node.

12. The method according to any one of claims 1 to 11, wherein when the reference node is faulty, the method further comprises:
determining, by the control node according to the information about the time difference between the two adjacent network nodes, a time adjustment value that needs to be used when the to-be-synchronized network node is synchronized with a selected standby node; and
sending, by the control node, the determined time adjustment value to the to-be-synchronized network node.

13. The method according to any one of claims 1 to 12, wherein the control node comprises an operation, administration and maintenance OAM entity, a mobility management entity MME, a network management system NMS, or an element management system EMS.

14. A synchronization method in a communications network, wherein the method comprises:
receiving, by a network node in a to-be-synchronized area, a time adjustment value that is corresponding to the network node and that is sent by a control node; and
adjusting, by the network node, time of the network node according to the time adjustment value corresponding to the network node.

15. The method according to claim 14, wherein the method further comprises:
recording, by the network node after receiving a random access request sent by a terminal, a time at which the random access request is received; or
sending, by the network node, a handover request to another network node in the to-be-synchronized area; initiating, by the network node, blind detection after receiving a handover request acknowledgment returned by the another network node; and recording, after receiving a random access request sent by a terminal, a time at which the random access request is received.

16. The method according to claim 15, wherein the method further comprises:
reporting, by the network node, information about the time at which the random access request is received to the control node or the another network node in the to-be-synchronized area; or
reporting, by the network node after receiving a command that is used to instruct to report time information and that is sent by the control node, information about the time at which the random access request is received to the control node.

17. The method according to claim 16, wherein the method further comprises:
reporting, by the network node, information about a path delay between the network node and the terminal to the control node or the another network node; or
reporting, by the network node after receiving the command that is used to instruct to report the time information and that is sent by the control node, information about a path delay between the network node and the terminal to the control node.

18. The method according to claim 15, wherein the method further comprises:
receiving, by the network node, information about a time at which the another network node in the to-be-synchronized area receives the random access request, wherein the information is sent by the another network node;
determining, by the network node according to information about the time at which the network node receives the random access request and the information about the time at which the another network node receives the random access request, information about a difference between the times at which the network node and the another network node receive the random access request; and
reporting, by the network node, the determined time difference information to the control node, or reporting, by the network node after receiving a command that is used to instruct to report time information and that is sent by the control node, the determined time difference information to the control node.

19. The method according to claim 18, wherein the method further comprises: receiving, by the network node, information that is about a path delay between the another network node and the terminal and that is sent by the another network node; and
the determining, by the network node, information about a difference between the times at which the network node and the another network node receive the random access request comprises: determining, by the network node according to information about a path delay between the network node and the terminal, the information about the path delay between the another network node and the terminal, the information about the time at which the network node receives the random access request, and the information about the time at which the another network node receives the random access request, the information about the difference between the times at which the network node and the another network node receive the random access request.

20. The method according to any one of claims 14 to 19, wherein before the receiving, by a network node, a time adjustment value that is corresponding to the network node and that is sent by a control node, the method further comprises:
sending, by the network node, a synchronization request to the control node after determining that the network node is not synchronized.

21. The method according to claim 20, wherein the determining, by the network node, that the network node is not synchronized comprises:
determining, by the network node when detecting that a retransmission rate of a signal sent by the network node is greater than a specified first retransmission rate threshold, that the network node is not synchronized; or
determining, by the network node when detecting that a terminal signal retransmission rate reported by the terminal is greater than a specified second retransmission rate threshold, that the network node is not synchronized; or
determining, by the network node when detecting that a synchronization feature gain of the network node is less than a specified synchronization feature gain threshold, that the network node is not synchronized.

22. A control node, wherein the control node comprises:
an information obtaining module, configured to obtain information about a time difference between at least one group of two adjacent network nodes in a to-be-synchronized area;
an adjustment value determining module, configured to determine, according to the information about the time difference between the two adjacent network nodes, a time adjustment value that needs to be used when a to-be-synchronized network node in the to-be-synchronized area is synchronized with a selected reference node; and
a sending module, configured to send the determined time adjustment value to the to-be-synchronized network node, so that the to-be-synchronized network node adjusts time of the to-be-synchronized network node according to the corresponding time adjustment value.

23. The control node according to claim 22, wherein the information obtaining module is specifically configured to:
receive times at which the two adjacent network nodes separately receive a random access request sent by a terminal and that are separately reported by the two adjacent network nodes; and determine the information about the time difference between the two adjacent network nodes according to the times at which the two adjacent network nodes separately receive the random access request.

24. The control node according to claim 23, wherein the information obtaining module is specifically configured to:
receive times at which the two adjacent network nodes separately receive each of random access requests sent by different terminals and that are separately reported by the two adjacent network nodes; determine, for each of the different terminals, information about a difference between times at which the two adjacent network nodes receive a random access request from the terminal; perform averaging processing on all determined time difference information; and determine final information about the time difference between the two adjacent network nodes according to time difference information obtained after the averaging processing.

25. The control node according to claim 23 or 24, wherein the information obtaining module is further configured to:
receive information that is about a path delay between each of the two adjacent network nodes and the terminal and that is reported by each of the two adjacent network nodes; and determine the information about the time difference between the two adjacent network nodes according to the times at which the two adjacent network nodes separately receive the random access request and the information about the path delay between each of the two adjacent network nodes and the terminal.

26. The control node according to claim 22, wherein the information obtaining module is specifically configured to:
receive information about a difference between times at which the two adjacent network nodes receive a random access request sent by a terminal, wherein the information is reported by either of the two adjacent network nodes.

27. The control node according to claim 26, wherein the information obtaining module is specifically configured to:
receive information about a difference between times at which the two adjacent network nodes receive each of random access requests sent by different terminals, wherein the information is reported by either of the two adjacent network nodes; perform averaging processing on all received time difference information; and determine final information about the time difference between the two adjacent network nodes according to time difference information obtained after the averaging processing.

28. The control node according to claim 22, wherein the adjustment value determining module is specifically configured to:
determine that the to-be-synchronized network node is adjacent to the reference node; and determine information about a time difference between the to-be-synchronized network node and the reference node as the time adjustment value corresponding to the to-be-synchronized network node.

29. The control node according to claim 22, wherein the adjustment value determining module is specifically configured to:
determine that the to-be-synchronized network node is not adjacent to the reference node, and determine an intermediate network node that is adjacent to the to-be-synchronized network node; determine information about a time difference between the intermediate network node and the to-be-synchronized network node, and use the determined time difference information as a first time adjustment value; determine information about a time difference between the intermediate network node and the reference node, and use the determined time difference information as a second time adjustment value; and determine a sum of the first time adjustment value and the second time adjustment value as the time adjustment value corresponding to the to-be-synchronized network node.

30. The control node according to any one of claims 22 to 29, wherein before obtaining the information about the time difference between the two adjacent network nodes, the information obtaining module is further configured to receive a synchronization request sent by the to-be-synchronized network node; and
the sending module is further configured to deliver, to all network nodes in the to-be-synchronized area, a command used to instruct to report time information, or deliver, to a network node that is comprised in a path from the to-be-synchronized network node to the reference node and that is in the to-be-synchronized area, a command used to instruct to report time information, wherein
the to-be-reported time information comprises information about a difference between times at which the network node that receives the command and an adjacent network node of the network node receive a random access request sent by a terminal, or a time at which the network node that receives the command receives a random access request sent by a terminal.

31. The control node according to any one of claims 22 to 29, wherein the sending module is further configured to:
after a specified adjustment period is reached, deliver, to all network nodes in the to-be-synchronized area, a command used to instruct a network node in the to-be-synchronized area to report time information, wherein the to-be-reported time information comprises information about a difference between times at which the network node in the to-be-synchronized area and an adjacent network node of the network node receive a random access request sent by a terminal, or a time at which the network node in the to-be-synchronized area receives a random access request sent by a terminal.

32. The control node according to any one of claims 22 to 31, wherein the sending module is specifically configured to:
after the adjustment value determining module determines time adjustment values corresponding to all the network nodes in the to-be-synchronized area, send, to each network node at a same moment, a time adjustment value corresponding to the network node; or
after the adjustment value determining module determines time adjustment values corresponding to all the network nodes in the to-be-synchronized area, sequentially send, to corresponding network nodes in the to-be-synchronized area in order of levels of the network nodes, time adjustment values corresponding to network nodes of different levels, wherein the network nodes in the to-be-synchronized area are grouped into N levels, a network node that is adjacent to the reference node belongs to a first level, and a network node that is adjacent to a network node of an i^{th} level belongs to an (i+1)^{th} level, wherein 1≤i≤N and N is a positive integer; or
send the determined time adjustment value to the to-be-synchronized network node after the information obtaining module receives the synchronization request sent by the to-be-synchronized network node.

33. The control node according to any one of claims 22 to 32, wherein when the reference node is faulty, the adjustment value determining module is further configured to:
determine, according to the information about the time difference between the two adjacent network nodes, a time adjustment value that needs to be used when the to-be-synchronized network node is synchronized with a selected standby node; and
send the determined time adjustment value to the to-be-synchronized network node.

34. The control node according to any one of claims 22 to 33, wherein the control node comprises an OAM entity, an MME, an NMS, or an EMS.

35. A network node, wherein the network node comprises:
a receiving module, configured to receive a time adjustment value that is corresponding to the network node to which the receiving module belongs and that is sent by a control node; and
an adjustment module, configured to adjust, according to the time adjustment value received by the receiving module, time of the network node to which the adjustment module belongs.

36. The network node according to claim 35, wherein the network node further comprises:
a processing module, configured to: after the receiving module receives a random access request sent by a terminal, record a time at which the random access request is received; or
send a handover request to another network node in a to-be-synchronized area; initiate blind detection after the receiving module receives a handover request acknowledgment returned by the another network node; and record, after the receiving module receives a random access request sent by a terminal, a time at which the random access request is received.

37. The network node according to claim 36, wherein the processing module is further configured to:
report information about the time at which the receiving module receives the random access request to the control node or the another network node in the to-be-synchronized area; or
after the receiving module receives a command that is used to instruct to report time information and that is sent by the control node, report information about the time at which the receiving module receives the random access request to the control node.

38. The network node according to claim 37, wherein the processing module is further configured to:
report, to the control node or the another network node, information about a path delay between the network node to which the processing module belongs and the terminal; or
after the receiving module receives the command that is used to instruct to report the time information and that is sent by the control node, report information about a path delay between the network node and the terminal to the control node.

39. The network node according to claim 36, wherein
the receiving module is further configured to receive information about a time at which the another network node in the to-be-synchronized area receives the random access request, wherein the information is sent by the another network node; and
the processing module is further configured to: determine, according to information about the time at which the receiving module receives the random access request and the information about the time at which the another network node receives the random access request, information about a difference between the times at which the network node and the another network node receive the random access request; and report the determined time difference information to the control node, or after the receiving module receives a command that is used to instruct to report time information and that is sent by the control node, report the determined time difference information to the control node.

40. The network node according to claim 39, wherein
the receiving module is further configured to receive information that is about a path delay between the another network node and the terminal and that is sent by the another network node; and
the processing module is further configured to determine, according to information about a path delay between the network node and the terminal, the information about the path delay between the another network node and the terminal, the information about the time at which the receiving module receives the random access request, and the information about the time at which the another network node receives the random access request, the information about the difference between the times at which the network node and the another network node receive the random access request.

41. The network node according to any one of claims 35 to 40, wherein the network node further comprises:
a determining module, configured to send a synchronization request to the control node after determining that the network node to which the determining module belongs is not synchronized.

42. The network node according to claim 41, wherein that the determining module determines that the network node to which the determining module belongs is not synchronized comprises:
determining, when detecting that a retransmission rate of a signal sent by the network node is greater than a specified first retransmission rate threshold, that the network node is not synchronized; or
determining, when detecting that a terminal signal retransmission rate reported by the terminal is greater than a specified second retransmission rate threshold, that the network node is not synchronized; or
determining, when detecting that a synchronization feature gain of the network node is less than a specified synchronization feature gain threshold, that the network node is not synchronized.
